# EUROPÄISCHE PATENTSCHRIFT

(11) **EP 0 845 869 B1**
(45) Veröffentlichungstag und Bekanntmachung des Hinweises auf die Patenterteilung: **27.04.2005**
(21) Anmeldenummer: 97118481.7
(22) Anmeldetag: 24.10.1997
(51) Int. Cl.: H04B 1/38, H04B 1/18, H04B 1/00, H01Q 23/00, H04Q 7/30

(54) **Kommunikationseinrichtung in einem Kampffahrzeug**
Communications system for a combat vehicle
Système de communication pour un véhicule de combat

(30) Priorität: 02.12.1996 DE 19649926
(43) Veröffentlichungstag der Anmeldung: 03.06.1998
(73) Patentinhaber: Krauss-Maffei Wegmann GmbH & Co. KG, 80997 München (DE)
(72) Erfinder: Scheibel, Axel, Dr., 34266 Niestetal (DE)
(74) Vertreter: Feder, Wolf-Dietrich, Dr. Dipl.-Phys.

(56) Entgegenhaltungen:
- WO-A-92/12579
- US-A- 5 187 807
- US-A- 5 604 925

## Beschreibung

Die vorliegende Erfindung betrifft eine Kommunikationseinrichtung in einem Kampffahrzeug mit mindestens einer Sendeantenne und mindestens einer Empfangsantenne und einer Anzahl von Kommunikationsendgeräten, die größer ist als die Anzahl der Sendeantennen oder Empfangsantennen.

In der jüngsten Zeit besteht auch im militärischen Bereich ein stetig steigender Bedarf an Kommunikation. Aus diesem Grunde sind moderne Kampffahrzeuge mit einer Vielzahl von Kommunikationsendgeräten ausgestattet. Diese dienen sowohl zur Übertragung von allgemeinen Informationen als auch zur individuellen Kommunikation zwischen ausgewählten Systemkomponenten (Datenendgeräte oder Gesprächsteilnehmer). Infolge der statistischen Unabhängigkeit der Daten, die dabei übertragen werden, ist kein festes Schema für den Datenverkehr zwischen den verschiedenen Kommunikationssystemen vorhanden. Daher besteht die Forderung, daß prinzipiell ein Parallelbetrieb aller Kommunikationsendgeräte, - gegebenenfalls auch im gleichen Frequenzband - zu gewährleisten ist. Gemäß dem aktuellen Stand der Entwicklung wird bei heutigen Kampffahrzeugen für jedes einzelne Kommunikationsendgerät eine eigene Antenne vorgesehen. Daraus ergibt sich aber das Problem, daß oft eine Vielzahl von Antennen auf demselben Fahrzeug angeordnet sein müssen. Als Extremfall stellen sich dabei Kampffahrzeuge der neuesten Generation dar, welche unter Umständen sechs oder mehr Antennen zur Realisierung aller geforderten Kommunikationspfade benötigen würden. Die Notwendigkeit des Vorhandenseins einer derart großen Antennenanzahl mit einem aus hochfrequenztechnischer Betrachtungsweise hinreichenden Abstand zueinander steht jedoch in direktem Gegensatz zur Forderung räumlich kleiner aber extrem mobiler Systeme hoher Kampfkraft. Besonders verschärft wird die Situation an einigen dieser Kampffahrzeuge noch durch das zusätzliche Vorhandensein von Radarantennen, die ebenso wie schwenkbare Waffen einen azimutalen Freiraum benötigen, in dem keine Antennen angeordnet sein können, oder von Antennen zur Bestimmung der Fahrzeugkoordinaten im Raum.

Es besteht daher die Forderung nach einer Koppelung möglichst vieler Kommunikationsendgeräte auf ein Minimum von Antennen. Eine ideale Lösung wäre hier die Reduktion der Anzahl der benötigten Antennen auf eine je benutztem Frequenzband. Diese ideale Lösung ist jedoch technisch nicht realisierbar, da die Funktion der einzelnen Geräte dann nicht mehr unter allen denkbaren Betriebszuständen gewährleistet werden kann. Die Geräte "stopfen" sich gegenseitig zu.

Der Erfindung liegt die Aufgabe zugrunde, eine Kommunikationseinrichtung mit den eingangs und im des Patentanspruchs 1 erwähnten Merkmalen so auszubilden, daß sie ein Minimum von Antennen, typischerweise zwei Antennen, am Kampffahrzeug benötigt.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die Erfindung geht von einem Konzept aus, bei dem lediglich eine Antenne für den Sendepfad und eine Antenne für den Empfangspfad notwendig ist. Diese starke Reduktion der Antennenzahl wird durch den Einsatz einer Funktionseinheit ermöglicht, die als eine Signalpfadmatrix enthaltende Steuerlogik arbeitet. Diese Baugruppe schaltet den HF-Signalpfad der einzelnen Kommunikationsendgeräte, also beispielsweise Funkgeräte, abhängig von deren Betriebszustand (Senden oder Empfangen) entweder auf einen einen Leistungsaddierer enthaltenden Sendepfad oder im Empfangsfall auf einen einen Pegelverteiler enthaltenden Empfangspfad. Dabei können zur Umschaltung der Signalpfadmatrix in den geforderten Betriebszustand Signale verwendet werden, die auch in den Kommunikationsendgeräten die entsprechende Umschaltung vornehmen. Alternativ können die Steuersignale auch aus Signalen synthetisiert werden, die extern am Funkgerät zur Verfügung stehen, jedoch ursächlich keinen Einfluß auf die Umschaltung der Betriebszustände "Senden" und "Empfangen" ausüben. Als Konsequenz der Umschaltung kommt es somit in keinem Fall zu einem "Zustopfen" der Empfänger auch in dem Fall, daß zum gleichen Zeitpunkt andere Geräte auf Sendung sind. Da die Kommunikationsendgeräte bei diesem Konzept im Regelfall mit kleiner Leistung arbeiten sollten, ergibt sich an der Sendeantenne ein geringfügiges Leistungsdefizit. Dieses Defizit kann jedoch sehr einfach durch einen entsprechenden Verstärker - dimensioniert als Sendeverstärker -kompensiert werden. Der wesentliche Vorteil des Betriebes der Geräte mit abgesenkter Sendeleistung besteht in der Verminderung der Gesamtleistung in der Baugruppe Leistungsaddierer-Sendepfad und somit im zusätzlichen Schutz der Empfängereingangsstufen. Prinzipiell wird die Dimensionierung der Antennensteuerung jedoch so vorgenommen, daß auch dann kein Schaden an den Kommunikationsendgeräten entsteht, wenn alle gleichzeitig ihre nominale Sendeleistung abgeben. Im Falle des Empfangsbetriebes eines oder mehrerer Geräte wird die Umschaltung der Signalpfadmatrix für diese Geräte in der Betriebsart Empfangen vorgenommen. Damit wird der HF-Pfad des jeweiligen Gerätes mit dem Pegelverteiler-Empfangspfad verbunden, d.h. auf die Empfangsantenne geschaltet. An dieser Stelle ist jedoch zu berücksichtigen, daß sowohl durch die Leistungsaufteilung als auch durch die vorzusehende Filtereinheit eine Reduktion der Empfängereingangsleistung bezogen auf den Antennenfußpunkt gegeben ist. Dies kann aber auch durch Einsatz eines Empfangsverstärkers kompensiert werden.

Ein Vorteil der erfindungsgemäßen Kommunikationseinrichtung besteht auch darin, daß auch die benötigte Transportkapazität für einen eventuell abgesetzten Antennenbetrieb bei der erfindungsgemäßen Kommunikationseinrichtung deutlich niedriger ist und damit einfacher realisierbar ist, als bei herkömmlichen Einrichtungen.

Die erfindungsgemäße Kommunikationseinrichtung kommt prinzipiell mit einer Sendeantenne und einer Empfangsantenne aus. Es ist aber auch grundsätzlich möglich, mehrere Sendeantennen vorzusehen. Eine zweite Sendeantenne ermöglicht eine günstigere Leistungsverteilung, wenn mehrere Sender gleichzeitig operieren. Weiterhin bietet diese Variante des Konzepts ein gesteigertes Maß an Redundanz, resultierend aus den gestiegenen Antennenressourcen. Diese Redundanz bedingt allerdings einen erhöhten Aufwand innerhalb der Steuerlogik, da als Folge mehrerer verfügbarer Sendeantennen immer die für den jeweiligen Systemzustand optimale Zuordnung der Sendeeinheiten zu den vorhandenen Antennen ermittelt werden muß.

Unabhängig von der Konstellation im Sendezweig ist auch der Einsatz von mehreren Empfangsantennen möglich. Von besonderem Interesse ist eine derartige Möglichkeit bei Randbedingungen, welche die Ausnutzung von Raumdiversity vorteilhaft erscheinen lassen. Beispielhaft seien hier Einsatzgebiete in Regionen mit einer Vielzahl geologisch bedingter Reflektoren oder auch Bereiche hoher Bebauungsdichte genannt. Allerdings ergibt sich auch hier die Notwendigkeit einer komplexeren (intelligenteren) Steuerlogik. Auch in diesem Falle ist eine gesteigerte Redundanz vorhanden.

Im folgenden wird anhand der beigefügten Zeichnungen ein Ausführungsbeispiel für eine Kommunikationseinrichtung nach der Erfindung näher erläutert.

In den Zeichnungen zeigen:
Fig. 1 in einem Blockschaltbild eine Kommunikationseinrichtung mit einer Sendeantenne, einer Empfangsantenne und N Funkgeräten;
Fig. 2 ebenfalls im Blockschaltbild eine detailliertere Darstellung der Steuerlogik der Einrichtung nach Fig. 1.

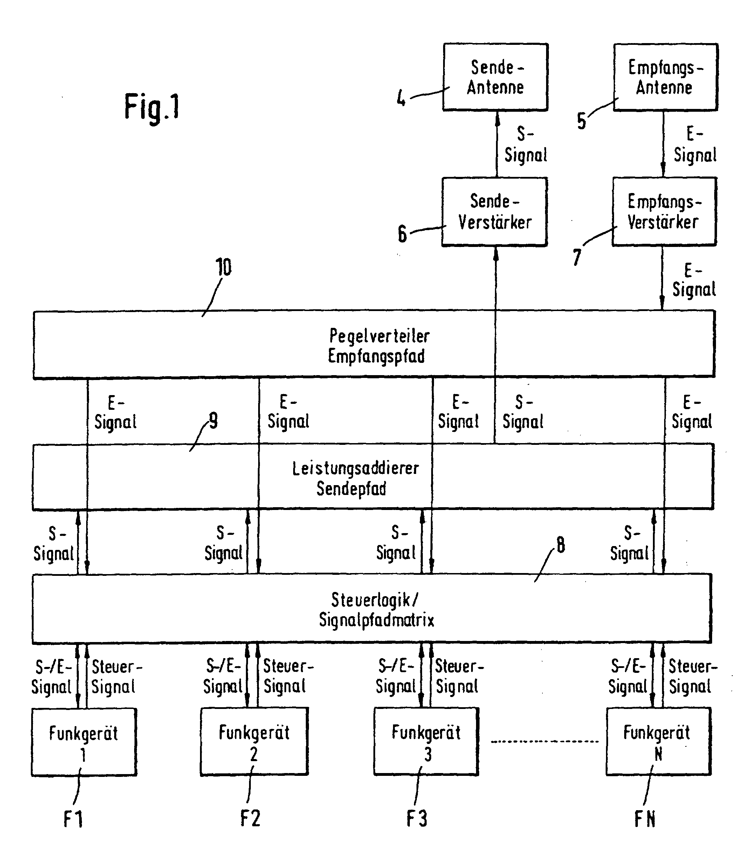

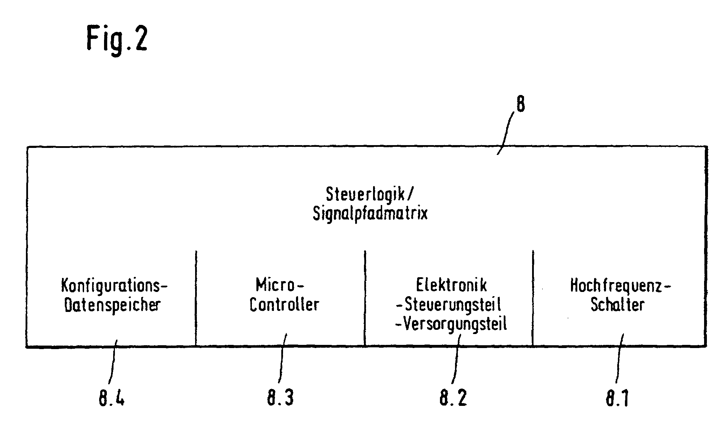

Die in den Fig. 1 und 2 dargestellte Kommunikationseinrichtung ist zum Einbau an und in einem, im übrigen nicht dargestellten, Kampffahrzeug, beispielsweise einem Kampfpanzer, gedacht.

Es sind eine Anzahl von Funkgeräten F1, F2, F3 bis FN vorhanden, sowie eine Sendeantenne 4 und eine Empfangsantenne 5.

Die HF-Signalpfade "S/E-Signal" der Funkgeräte sind an eine Einheit 8 "Steuerlogik/Signalpfadmatrix" angeschlossen, der auch von den Funkgeräten ausgehende Steuersignale zugeführt werden.

Wie in Fig. 2 angedeutet, enthält die Baueinheit 8, die im übrigen nicht genauer dargestellten, die signalmatrix bildenden, ansteuerbaren Hochfrequenzschalter 8.1, sowie einen speziell programmierten Microcontroller 8.3, an den ein Konfigurations-Datenspeicher 8.4 angeschlossen ist, sowie eine Elektronik 8.2 mit einem Steuerungsteil und einem Versorgungsteil.

Der Microcontroller 8.3 ermittelt auf der Basis der aktuellen Anforderungen und der Ressourcen des Systems - abgespeichert im Konfigurations-Datenspeicher 8.4 - unter Anwendung signaltheoretischer Ansätze und physikalischer Gesetze die optimale Verknüpfung der einzelnen Funkgeräte (F1, F2, F3 bis FN) mit den verfügbaren Antennen, also der Sendeantenne 4 und der Empfangsantenne 5. Gesteuert wird dies von den von den Funkgeräten ausgehenden Steuersignalen, die jeweils signalisieren, ob das betreffende Gerät im Betriebszustand "Senden" oder im Betriebszustand "Empfangen" ist. Die vom Microcontroller 8.3 berechneten Verknüpfungsdaten werden dem Steuerungsteil der Elektronik 8.2 zugeführt. Innerhalb des Steuerungsteils erfolgt die Erzeugung der entsprechenden Signale für die Ansteuerung der Hochfrequenzschalter 8.1 in der Signalpfadmatrix. Durch diese werden die Funkgeräte F1, F2, F3 bis FN entweder über die Baugruppe 9 "Leistungsaddierer-Sendepfad" sowie einen Sendeverstärker 6 mit der Sendeantenne 4 oder über die Baugruppe 10 "Pegelverteiler/Empfangspfad" und dem Empfangsverstärker 7 mit der Empfangsantenne 5 verbunden.

Der Versorgungsteil der Elektronik 8.2 stellt sowohl die notwendige Gleichstromleistung der gesamten Antennensteuerung als auch die benötigten Spannungen für Antennenanpaßnetzwerke und -verstärker zur Verfügung.

## Patentansprüche

1. Kommunikationseinrichtung in einem Kampffahrzeug mit mindestens einer Sendeantenne und mindestens einer Empfangsantenne und einer Anzahl von Kommunikationsendgeräten, die größer ist als die Anzahl der Sendeantennen oder Empfangsantennen, **gekennzeichnet durch** eine eine Signalpfadmatrix enthaltende Steuerlogik (8), **durch** welche jedes Kommunikationsendgerät (F1, F2, F3 ... FN) in Abhängigkeit von seinem Betriebszustand "Senden" oder "Empfangen" jeweils entweder über einen einen Leistungsaddierer enthaltenden HF-Sendepfad (9) mit einer Sendeantenne (4) oder über einen einen Pegelverteiler enthaltenden HF-Empfangspfad (10) mit der Empfangsantenne (5) verbindbar ist.

2. Kommunikationseinrichtung nach Anspruch 1, **dadurch gekennzeichnet, daß** zum Umschalten der Signalpfadmatrix Steuersignale dienen, die auch in den Kommunikationsendgeräten die Umschaltung des Betriebszustandes bewirken und die der Steuerlogik (8) zugeführt werden.

3. Kommunikationseinrichtung nach Anspruch 1, **dadurch gekennzeichnet, daß** zum Umschalten der Signalpfadmatrix Steuersignale dienen, die aus Signalen synthetisiert werden, welche am Kommunikationsendgerät extern verfügbar sind, jedoch explizit für die Umschaltung des Betriebszustandes nicht verwendet werden.

4. Kommunikationseinrichtung nach einem der Ansprüche 1 bis 3, **dadurch gekennzeichnet, daß** jeder Sendeantenne (4) ein Sendeverstärker (6) vorgeschaltet ist.

5. Kommunikationseinrichtung nach einem der Ansprüche 1 bis 4, **dadurch gekennzeichnet, daß** jeder Empfangsantenne (5) ein Empfangsverstärker (7) nachgeschaltet ist.

6. Kommunikationseinrichtung nach einem der Ansprüche 1 bis 5, **dadurch gekennzeichnet, daß** die Steuerlogik (8) außer den die Signalpfadmatrix aufbauenden ansteuerbaren Hochfrequenzschaltern (8.1) einen programmierbaren Microcontroller (8.3) enthält, an den ein Konfigurations-Datenspeicher (8.4) angeschlossen ist und der auf der Basis der aktuellen Anforderungen und Ressourcen des Systems die optimale Verknüpfung der einzelnen Kommunikationsendgeräte mit der verfügbaren Antenne berechnet und die Verknüpfungsdaten einem Steuerungsteil der Steuerlogik (8) zuführt, von dem die HF-Schalter (8.1) entsprechend angesteuert werden.

7. Kommunikationseinrichtung nach einem der Ansprüche 1 bis 6, **dadurch gekennzeichnet, daß** die Steuerlogik (8) einen Versorgungsteil enthält, der die Gleichstromleistung der gesamten Antennensteuerung sowie die Spannungen für Antennenanpaßnetzwerke und -verstärker erzeugt.

## Claims

1. A communications arrangement in a combat vehicle having at least one transmitting antenna and at least one receiving antenna and a number of communications terminals that is larger than the number of transmitting antennae or receiving antennae, **characterised by** a control-logic circuit (8) containing a signal-path matrix, by means of which each communications terminal (F1, F2, F3 ... FN) is capable of being connected, depending on its "transmitting" or "receiving" operating state, respectively either to a transmitting antenna (4) via an HF transmit path (9) containing a power adder or to the receiving antenna (5) via an HF receive path (10) containing a level-distributor.

2. Communications arrangement according to Claim 1, **characterised in that** control signals which also bring about the switch-over of the operating state in the communications terminals and which are supplied to the control-logic circuit (8) serve for switching over the signal-path matrix.

3. Communications arrangement according to Claim 1, **characterised in that** control signals which are synthesised from signals that are available externally on the communications terminal but that are not used explicitly for the switch-over of the operating state serve for switching over the signal-path matrix.

4. Communications arrangement according to one of Claims 1 to 3, **characterised in that** a transmit amplifier (6) is connected upstream of each transmitting antenna (4).

5. Communications arrangement according to one of Claims 1 to 4, **characterised in that** a receive amplifier (7) is connected downstream of each receiving antenna (5).

6. Communications arrangement according to one of Claims 1 to 5, **characterised in that** the control-logic circuit (8) contains, besides the selectable high-frequency switches (8.1) establishing the signal-path matrix, a programmable microcontroller (8.3) to which a configuration data memory (8.4) is linked and which calculates, on the basis of the current requirements and resources of the system, the optimal linkage of the individual communications terminals with the available antenna and supplies the linkage data to a control component of the control-logic circuit (8), by which the HF switches (8.1) are correspondingly addressed.

7. Communications arrangement according to one of Claims 1 to 6, **characterised in that** the control-logic circuit (8) contains a supply component which generates the d.c. power of the overall antenna control system and also the voltages for antenna-matching networks and antenna-matching amplifiers.

## Revendications

1. Dispositif de communication dans un véhicule de combat possédant au moins une antenne d'émission et au moins une antenne de réception et un nombre d'appareils terminaux de communication, qui est supérieur au nombre des antennes d'émission ou des antennes de réception, **caractérisé par** une logique de commande (8) qui contient une matrice de voies de transmission de signaux, à l'aide de laquelle chaque appareil terminal de communication (F1,F2, F3...FN) peut être relié en fonction de son état de fonctionnement "émission" ou "réception" respectivement par l'intermédiaire d'une voie d'émission HF (9) contenant un additionneur de puissance, à une antenne d'émission (4) ou, par l'intermédiaire d'une voie de réception HF (10) contenant un répartiteur de niveau, à l'antenne de réception (5).

2. Dispositif de communication selon la revendication 1, **caractérisé en ce que** pour la commutation de la matrice de voies de transmission de signaux, on utilise des signaux de commande, qui réalisent également, dans les appareils terminaux de communication, la commutation de l'état de fonctionnement et qui sont envoyés à la logique de commande (8).

3. Dispositif de communication selon la revendication 1, **caractérisé en ce que** pour la commutation de la matrice des voies de transmission de signaux on utilise des signaux de commande, qui sont synthétisés à partir de signaux, qui sont disponibles de l'extérieur au niveau de l'appareil terminal de communication, mais ne sont pas utilisés de façon explicite pour la commutation de l'état de fonctionnement.

4. Dispositif de communication selon l'une des revendications 1 à 3, **caractérisé en ce qu'**un amplificateur d'émission (6) est branché en amont de chaque antenne d'émission (4).

5. Dispositif de communication selon l'une des revendications 1 à 4, **caractérisé en ce qu'**un amplificateur de réception (7) est branché en aval de chaque antenne de réception (5).

6. Dispositif de communication selon l'une des revendications 1 à 5, **caractérisé en ce que** la logique de commande (8) contient, en dehors des commutateurs à haute fréquence commandables (8.1), qui établissent la matrice de voies de transmission de signaux, un microcontrôleur programmable (8.3), auquel est connectée une mémoire de données de configuration (8.4) et qui, sur la base des demandes et ressources actuelles du système, calcule la combinaison optimale des appareils terminaux individuels de communication avec l'antenne disponible et envoie les données de combinaison à une partie de commande de la logique de commande (8), par laquelle les interrupteurs HF (8.1) sont commandés de façon correspondante.

7. Dispositif de communication selon l'une des revendications 1 à 6, **caractérisé en ce que** la logique de commande (8) contient une partie d'alimentation, qui produit la puissance en courant continu de l'ensemble de la commande d'antenne ainsi que les tensions pour des réseaux d'adaptation d'antennes et des amplificateurs d'antennes.
